# EUROPEAN PATENT APPLICATION

(11) **EP 2 882 031 A1**
(43) Date of publication of application: **10.06.2015**
(21) Application number: 13824973.5
(22) Date of filing: 01.08.2013
(51) Int. Cl.: H01M 10/54, H01M 2/36

(54) **DISTILLED WATER FILLING SYSTEM FOR INDUSTRIAL BATTERY**

(30) Priority: 02.08.2012 KR 20120084832
(71) Applicant: Maroomcs Co. Ltd, Chungcheongbuk-do 363-887 (KR)
(72) Inventor: KANG, Yun Jeong, Cheongju-si Chungcheongbuk-do 361-815 (KR); HAN, Yeon Soo, Cheongju-si Chungcheongbuk-do 361-819 (KR)
(74) Representative: Nobbe, Matthias
(86) International application number: PCT/KR2013/006950
(87) International publication number: WO 2014/021659

(57) **Abstract**

The present invention provides a distilled water filing system for an industrial battery comprising a distilled water storage tank installed, together with a battery, in a device equipped with the battery and storing a distilled water; a supply hose connected to the distilled water storage tank and supplying the distilled water in the distilled water storage tank into the battery; and an injection valve mounted on the battery and connected to the supply hose, the injection valve selectively blocking a supply of a distilled water to the battery according to an electrolyte level in the battery.

The injection valve includes a connection port connected to the supply hose; a valve housing disposed under the connection port and including an injection hole connected to the connection port, wherein a bottom of the valve housing is opened, and the valve housing is inserted into the battery; and a buoyant opening-closing unit disposed in the valve housing, wherein the buoyant opening-closing unit rises by a buoyant force to close the injection hole of the valve housing is lowered by gravity to open the injection hole. The buoyant opening-closing unit includes a float having a hollow shape and including a plurality of water flow channels extending along a vertical direction; and a packing cap disposed at an upper side of the float and closing the injection hole.

By the above-described distilled water filing system for the industrial battery according to the present invention, since the distilled water storage tank is installed in the device together with the battery, the filing operation of the distilled water is continuously performed. In addition, by simple operation of checking the level of the distilled water storage tank and re-filling the distilled water to the distilled water storage tank, the work required for filing the distilled water is completed such that there is an advantage of improving the work efficiency.

## Description

### Technical Field

The present invention relates to a distilled water system being applicable to an industrial battery, where a distilled water filing is required, and being capable of increasing stability and efficiency of a filing process.

### Background Art

The industrial battery as a kind of a secondary battery (or cell) has a combination of a plurality of cells, in each of which an anode plate and a cathode plate are inserted and an electrolyte is filled, and are widely used for supplying a power to an electric cart, e.g., a car, or a transport machine, e.g., an electric forklift.

Generally, in the industrial battery, a discharging operation generating the power by using a chemical energy from a chemical reaction between the anode plate and the cathode plate in the electrolyte and a charging operation sulphatizing the electrolyte by an electric energy supplied from an outer source are repeated such that the industrial battery is continuously used.

On the other hand, since the electric cart or the electric forklift among the machine using the industrial battery uses the power supplied from the battery as a main power source, the periodical charging operation of the battery using the outer power is required. In addition, the water in the electrolyte is evaporated by a chemical reaction in the battery such that the electrolyte level is lowered and the electrolyte concentration is increased. Accordingly, the distilled water is filled to control the electrolyte level and the electrolyte concentration.

Generally, the worker opens a cap disposed on a top surface of the battery and manually fills the distilled water. However, since the electrolyte level is visually checked by the worker in the distilled water filing process, there may be a problem of distilled water overflow.

When the distilled water is overflowed, the worker has damages, e.g., burns, or the peripheral equipments are corroded by the electrolyte including sulfuric acid. Accordingly, the strong attention for preventing the distilled water overflow is required to the worker. Namely, the distilled water filling process is complicated and dangerous.

The worker should frequently check the electrolyte level and determine to do the distilled water filling process. However, since the process of checking the electrolyte level in each cell of the battery is very cumbersome, there may be problems in that the battery having the lowered electrolyte level is not checked.

To resolve these problems, the distilled water filing system for conveniently filing the distilled water to the battery is introduced.

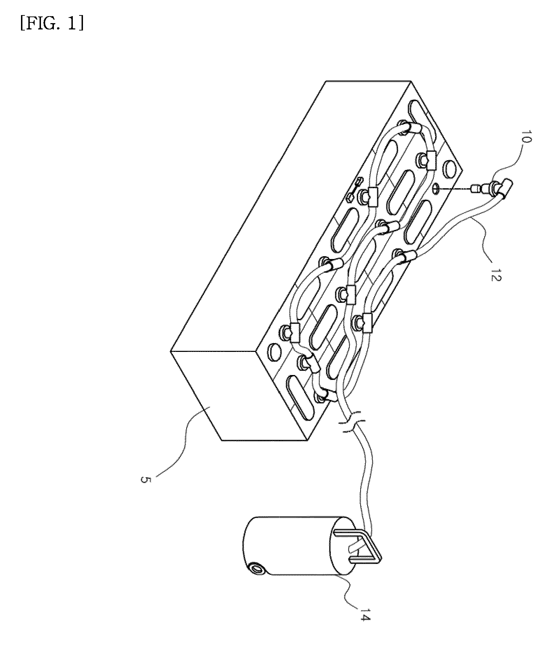

As shown in FIG. 1, the related art distilled water filing system includes a plurality of injection valves 10 installed to the battery 5, a supply hose 12 sequentially connected to each injection valve 10 and a filing cart 14 supplying the distilled water through the supply hose 12.

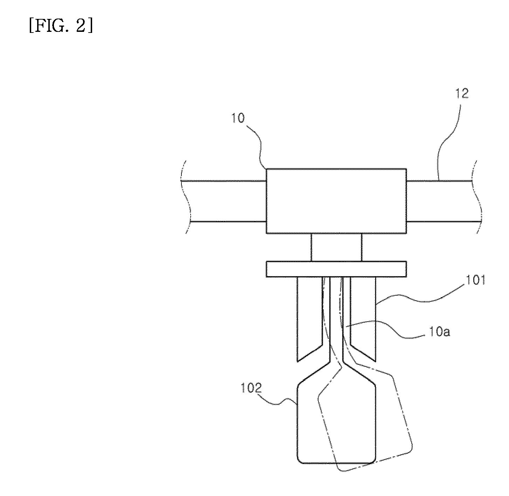

The injection valve 10 is classified into several types, such as float type or a pressure-sensitive type, accordingly to shut-off principle. The float type injection valve 10, as shown in FIG. 2, includes a port cap 101 having an injection path (or injection holes) 10a therein and a float 102 installed to the port cap 101 and being configured to move up and down in the injection path 10a.

The filing cart 14 includes a tank storing the distilled water and a pump pressing and transporting the distilled water in the tank through the supply hose 12. The filing cart 14 may further include wheels to be easily movable.

In the related art distilled water filing system with the injection valve 10 installed to each cell of the battery, the distilled water supplied from the filing cart 14 is transported through the supply hose 12 such that the distilled water is injected into each cell of the battery 5 through the injection valve 10. When the electrolyte level is increase by the distilled water injection, the float 102 moves up such that the injection path 10a of the port cap 101 is blocked by the float 102. As a result, the distilled water injection is finished or blocked.

Since there are the plurality of cells in the battery 5, the distilled water filing process is sequentially performed in the cells. After the distilled water filing process into one cell is finished and the injection valve 10 is closed, the distilled water filing processes in other cells are sequentially performed such that the distilled water filing process in all cells are finished.

There are some problems in the related art distilled water filing system in the structural side and the functional side. The problems are explained.

As mentioned above, the industrial battery 5 has a combination of the plurality of cells. According to a kind of battery 5, several or dozens cells are combined. As a result, the injection valve 10 is installed or connected to and separated from the battery 5 in several or dozens times for the distilled water filing process to one battery 5.

Accordingly, in the related art, the very-cumbersome problem in the installation and the separation process of the injection valve 10 is generated.

In addition, since the temperature of the electrolyte is increased during the chemical reaction, the float 102 in the filing system, which includes the float type injection valve 10, is thermally deformed in the injection path 10a. The float 102 is bent such that the interference between the float 102 and the port cap 101. As a result, malfunction in that the float 102 does not move up and slowly responds with the electrolyte level rising may be caused.

When the closing operation of the injection valve 10 is undesirably performed because of the malfunction of the float 102, there is also a problem in that the distilled water may be overflowed during the distilled water injection process.

The filing system including the pressure-sensitive type injection valve (not shown) has a complicate structure and high price such that there is a problem in the costs for the system.

Moreover, in the related art distilled water filing system, since the worker frequently should check and do the injection operation when the level is lowered than a reference level, the very-cumbersome process of opening each cell and checking the residual of the electrolyte still remains.

### Detailed Illustration of Invention

### Technical Problem

The present invention has been made to solve the problems and provides a distilled water filing system for an industrial battery where the distilled water filing process to the battery can be efficiently and stably performed.

### Technical Solution

In order to achieve the above object, the present invention provides a distilled water filing system for an industrial battery comprising a distilled water storage tank installed, together with a battery, in a device equipped with the battery and storing a distilled water; a supply hose connected to the distilled water storage tank and supplying the distilled water in the distilled water storage tank into the battery; and an injection valve mounted on the battery and connected to the supply hose, the injection valve selectively blocking a supply of a distilled water to the battery according to an electrolyte level in the battery.

The injection valve includes a connection port connected to the supply hose; a valve housing disposed under the connection port and including an injection hole connected to the connection port, wherein a bottom of the valve housing is opened, and the valve housing is inserted into the battery; and a buoyant opening-closing unit disposed in the valve housing, wherein the buoyant opening-closing unit rises by a buoyant force to close the injection hole of the valve housing is lowered by gravity to open the injection hole.

The buoyant opening-closing unit includes a float having a hollow shape and including a plurality of water flow channels (or water flow paths) extending along a vertical direction; and a packing cap disposed at an upper side of the float and closing the injection hole.

A bottom of the float is thicker than other portions

The valve housing has a partially blocked structure such that the electrolyte flows into therein and the float is not separated

A finishing ring part having an inner diameter smaller than a diameter of the float is formed at edges of a lower side of the valve housing to prevent a separation of the float from the valve housing and to congest a flow of the distilled water in a gap between an inner side of the valve housing and the float

The distilled water storage tank is formed of a semi-transparent material or a transparent material such that a level of the distilled water in the distilled water storage tank is visually checked

### Effect of Invention

In a distilled water filing system for an industrial battery according to the present invention, since a distilled water storage tank with the battery is installed to a device, a distilled water filing process or operation is continuously performed. In addition, since the operation being necessary to the distilled water filing process is finished or completed by simple operation of checking the level of the distilled water storage tank and supplementing (or re-filing) the distilled water to the distilled water storage tank, there is an advantages of improving the work efficiency.

### Description of Drawings

FIG. 1 is a view showing a distilled water filing system for an industrial battery according to the related art.
FIG. 2 is a schematic view showing a float type injection valve used for a distilled water filing system for an industrial battery according to the related art.
FIG. 3 is a view showing a distilled water filing system for an industrial battery according to the present invention.
FIG. 4 is a cross-sectional perspective view showing an injection valve used for a distilled water filing system for an industrial battery according to the present invention.
FIG. 5 is a cross-sectional perspective view showing a buoyant opening-closing unit used for a distilled water filing system for an industrial battery according to the present invention.
FIGs. 6a and 6b are cross-sectional views illustrating an exemplary opening-closing operation of an injection valve of a distilled water filing system for an industrial battery according to the present invention.

### Embodiment of Invention

Reference will now be made in detail to the preferred embodiments, examples of which are illustrated in the accompanying drawings 3 to 6B.

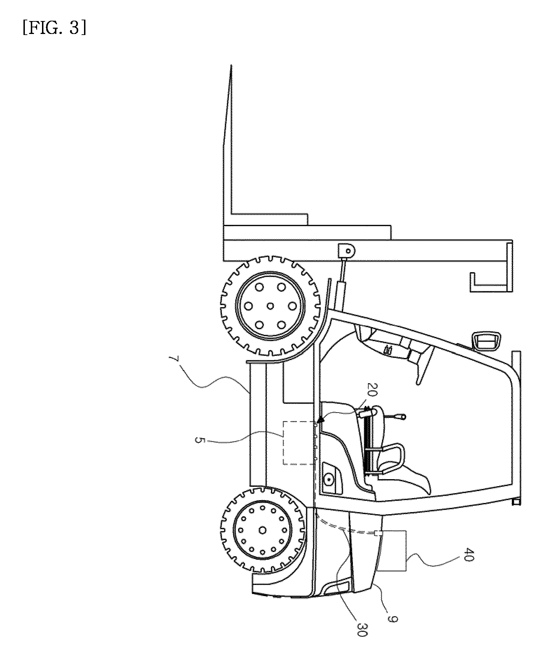

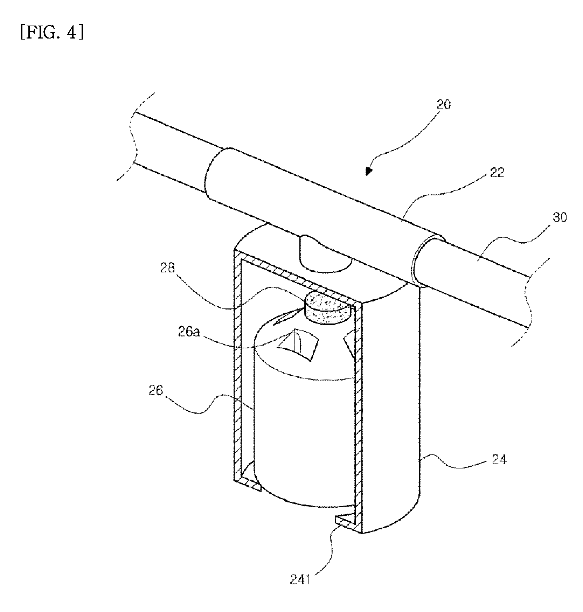

As shown in FIGs. 3 and 4, a distilled water filing system according to the present invention includes a distilled water storage tank 40 installed to a device 7, where a battery 5 is equipped, together with a battery 5, a supply hose 30 connected to the distilled water storage tank 40 and supplying a distilled water in the distilled water storage tank 40 to the battery 5 and an injection valve 20 installed to or mounted on the battery 5 and connected to the supply hose 30. The injection valve 20 selectively blocks the distilled water supply to the battery 5 according to an electrolyte level in the battery 5.

In this instance, the distilled water supply from the distilled water storage tank 40 to the battery 5 may be classified into a natural fall type and a pumping type according to their principles.

In the natural fall type, the distilled water storage tank 40 is disposed at a position higher than the battery 5 such that the distilled water in the distilled water storage tank 40 flows down through the supply hose 30. In the pumping type, the distilled water is transported into the battery 5 by a pressure pump (not shown) in the distilled water storage tank 40.

With the natural fall type, since the battery 5 is disposed at a lower portion with respect to a center of the device 7, such as forklift, it is preferred that the distilled water storage tank 40 is disposed at a relatively higher position, e.g., a posterior upper portion of an engine hood 9. (see FIG. 3)

The injection valve 20 includes a connection port 22 connected to the supply hose 30, a valve housing 24 disposed under the connection port 22 and including an injection hole 24a, a buoyant opening-closing unit in the valve housing 24. The injection hole 24a is positioned at a body of the valve housing 24 such that the body of the valve housing 24 and the connection port 22 are connected to each other by the injection hole 24a. A portion, i.e., a center, of a bottom surface of the valve housing 24 is removed such that the valve housing 24 has an opened bottom.

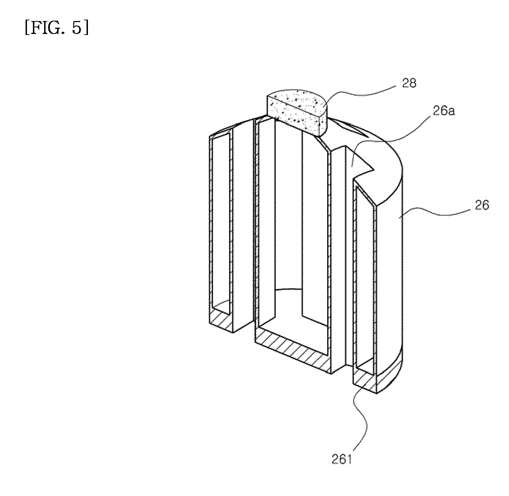

As shown in FIG. 5, the buoyant opening-closing unit includes a float 26 having a hollow shape and including a plurality of water flow channels 26a extending along a up-down direction, i.e., a vertical direction, and a packing cap 28 disposed at an upper side of the float 26 to cover or close the injection hole 24a.

In this instance, the float 26 may have a cylindrical shape of a relatively larger diameter, and an upper side of the float 26 may have a taper shape. A diameter, i.e., an outer diameter, of the float 26 is smaller than an inner diameter of the valve housing 24 and is larger than an inner diameter of a finishing ring part 241.

The packing cap 28 may be formed of an acid-resistance elastic material, and a bottom 261 of the float 26 may be thicker than other portions.

The valve housing 24 has a partially blocked or cut-off structure such that the electrolyte can flow into therein and the separation of the float 26 can be prevented. For example, the finishing ring part 241, which has the inner diameter smaller than the diameter of the float 26, may be formed at edges of the lower side of the valve housing 24.

To visually check the electrolyte level stored in the distilled water storage tank 40, the distilled water storage tank 40 may be formed of a semi-transparent material or a transparent material.

An operation of the above distilled water filing system according to the present invention will be explained.

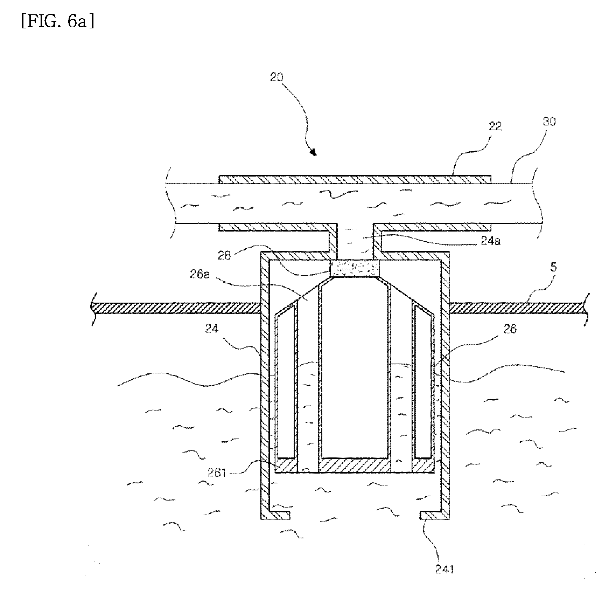

Firstly, the injection valve 20 is installed to the battery 5 such that the valve housing 24 is positioned at an inner side of the battery 5. As shown in FIG. 6a, when the electrolyte has a level as a reference level, the packing cap 28 of the float 26 rises by the buoyant force such that the injection hole 24a is blocked or closed by the packing cap 28. As a result, the distilled water is not injected into the battery 5.

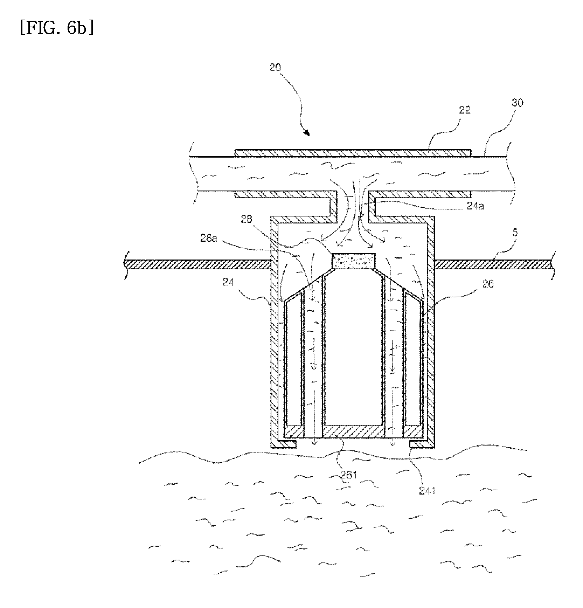

As shown in FIG. 6b, when the electrolyte has a level blow the reference level as the electrolyte is evaporated according to the use of the battery 5, a height of the float 26 is lowered and the packing cap 28 is separated from the injection hole 24a such that the injection hole 24a is opened.

In the injection hole open-state, the distilled water stored in the distilled water storage tank 40 is supplied to each injection valve 20 through the supply hose 30 and is sequentially injected into each cell of the battery 5.

When the electrolyte level reaches the reference level, the float 26 rises such that the packing cap 28 blocks the injection hole 24a. Namely, the injection valve 20 has a close-state such that the distilled water injection is stopped.

In the present invention, the distilled water storage tank 40 with the battery 5 is installed to the device 7 equipped with the battery 5. Accordingly, the distilled water is continuously supplied into the battery 5, and the distilled water injection is automatically stopped by the injection valve 20. As a result, only by checking the distilled water level in the distilled water storage tank 40 and filing the distilled water into the distilled water storage tank 40, the distilled water filing process into the battery 5 is easily performed.

In addition, since the distilled water storage tank 40 is formed of a semi-transparent material or a transparent material, the visually checking operation of the level in the distilled water storage tank 40 becomes easier.

In the present invention, due to the valve housing 24 and the buoyant opening-closing unit of the injection valve 20, the stability of the distilled water injection and stop operation is improved in comparison to the related art as explained below.

Firstly, as mentioned above, in the present invention, all portions of the float 26 are disposed in the valve housing 24, and the float 26 has a cylindrical shape of a relatively larger diameter. As a result, the malfunction by the thermal deformation problem of the float, which is generated in the related art float, is not generated.

In addition, since the bottom 261 of the float 26 is thicker than other portions, the barycenter, i.e., a center of gravity or mass, of the float 26 is lowered such that the float 26 is not staggered during the rising step. As a result, the mismatching or misaligning problem between the packing cap 28 and the injection hole 24a and the interference problem between the float 26 and the inner side of the valve housing 24 are actively prevented.

Moreover, although a gap between the flat 26 and the inner side of the valve housing 24 is not sufficient, there is no problem in the injection operation of the distilled water because the distilled water, which is injected through the injection hole 24a flows down through a gap between the float 26 and the inner side of the valve housing 24 and the water flow channel 26a in the float 26.

Furthermore, since the float 26 is supported by the finishing ring part 24 at the edges of the lower side of the valve housing 24, a flow of the distilled water through the gap between the float 26 and the inner side of the valve housing 24 may be congested or delayed. However, the congested or delayed distilled water serves as lubricant in the gap between the float 26 and the inner side of the valve housing 24 such that the motion or movement of the float 26 becomes smooth.

## Claims

1. A distilled water filing system for an industrial battery, comprising:
a distilled water storage tank installed, together with a battery, in a device equipped with the battery and storing a distilled water;
a supply hose connected to the distilled water storage tank and supplying the distilled water in the distilled water storage tank into the battery; and
an injection valve mounted on the battery and connected to the supply hose, the injection valve selectively blocking a supply of a distilled water to the battery according to an electrolyte level in the battery.

2. The distilled water filing system for the industrial battery according to claim 1, wherein the injection valve includes:
a connection port connected to the supply hose;
a valve housing disposed under the connection port and including an injection hole connected to the connection port, wherein a bottom of the valve housing is opened, and the valve housing is inserted into the battery; and
a buoyant opening-closing unit disposed in the valve housing, wherein the buoyant opening-closing unit rises by a buoyant force to close the injection hole of the valve housing is lowered by gravity to open the injection hole.

3. The distilled water filing system for the industrial battery according to claim 2, wherein the buoyant opening-closing unit includes:
a float having a hollow shape and including a plurality of water flow channels extending along a vertical direction; and
a packing cap disposed at an upper side of the float and closing the injection hole.

4. The distilled water filing system for the industrial battery according to claim 3, wherein a bottom of the float is thicker than other portions.

5. The distilled water filing system for the industrial battery according to claim 3, wherein the valve housing has a partially blocked structure such that the electrolyte flows into therein and the float is not separated.

6. The distilled water filing system for the industrial battery according to claim 5, wherein a finishing ring part having an inner diameter smaller than a diameter of the float is formed at edges of a lower side of the valve housing to prevent a separation of the float from the valve housing and to congest a flow of the distilled water in a gap between an inner side of the valve housing and the float.

7. The distilled water filing system for the industrial battery according to claim 1, wherein the distilled water storage tank is formed of a semi-transparent material or a transparent material such that a level of the distilled water in the distilled water storage tank is visually checked.
